# EUROPÄISCHE PATENTANMELDUNG

(11) **EP 0 671 314 A1**
(43) Veröffentlichungstag der Anmeldung: **13.09.1995**
(21) Anmeldenummer: 95101933.0
(22) Anmeldetag: 13.02.1995
(51) Int. Cl.: B62K 15/00

(54) **Faltrad**

(30) Priorität: 09.03.1994 DE 9403966 U
(71) Anmelder: DIAMANT FAHRRADWERKE GMBH, D-09117 Chemnitz (DE)
(72) Erfinder: Müller, Hartwig Dr.-Ing., D-09126 Chemnitz (DE)
(74) Vertreter: Grünecker, Kinkeldey, Stockmair & Schwanhäusser Anwaltssozietät

(57) **Zusammenfassung**

Bei einem Faltrad (F) mit einem hinteren, ein Tretlagergehäuse (T) aufweisenden Rahmenteil (H) und einem eine Oberstrebe (1) und ein Unterstrebenpaar (2) aufweisenden vorderen Rahmenteil (V), einem Gelenk (G) zwischen den Rahmenteilen (V, H) und einer lösbaren Klemmvorrichtung (K) zwischen des Unterstrebenpaares (2) und dem Tretlagergehäuse (T) sowie einem verstellbaren Klemmteil (14) in der Klemmvorrichtung (K) ist der Klemmteil (14) annähernd T-förmig ausgebildet und am Tretlagergehäuse (T) in Richtung der Längsachse (X) des Hochschenkels (T) verstellbar und um die Längsachse (X) des Hochschenkels verdrehbar gehaltert.

## Beschreibung

Die Erfindung betrifft ein Faltrad der im Oberbegriff des Patentanspruchs 1 angegebenen Art.

Bei einem aus DE-A1-41 05 801 bekannten Faltrad weist die Klemmvorrichtung eine auf dem Tretlagergehäuse verdrehbare Drehbuchse auf, die eine Gewindeaufnahme für einen Flügelbolzen oder einen Spannhebel aufweist, mit dem die Unterstreben-Halteenden gegen die Unterseite des Tretlagergehäuses anpreßbar sind. Die Klemmvorrichtung ist vielteilig, baulich aufwendig, und unbequem zu handhaben. Ferner hat sie beträchtliches Gewicht.

Bei einem aus DE-C2-39 31 978 bekannten Faltrad sind an den Halteenden der Unterstreben ringförmige Ösen angeformt, die mit dazu passenden Ösen im hinteren Rahmenteil derart zum Tretlagergehäuse zusammenbaubar sind, daß sich eine feste Verbindung zwischen dem vorderen und dem hinteren Rahmenteil ergibt. Zum Falten des Faltrades bzw. zum Aufbauen ist es erforderlich, die Tretkurbel mit den Pedalen und der vorderen Kettenscheibe zu zerlegen bzw. zusammenzubauen. Dies ist nicht nur zeitaufwendig und mühsam, sondern verlangt vom Benutzer beträchtliches Geschick und die Bereitschaft, sich die Hände schmutzig zu machen.

Der Erfindung liegt die Aufgabe zugrunde, ein Faltrad der eingangs genannten Art zu schaffen, das sich durch eine baulich einfache, leichtgewichtige und bequem zu handhabende Klemmvorrichtung auszeichnet.

Die gestellte Aufgabe wird erfindungsgemäße mit den im Anspruch 1 enthaltenen Merkmalen gelöst.

Der Klemmteil ist bei dieser Ausbildung dank seiner Form klein und leichtgewichtig. Er läßt sich einfach am Tretlagergehäuse anbringen. Die Haltewirkung für die Halteenden ist statisch einwandfrei. Die Betätigung zum Lösen oder Festlegen ist denkbar einfach, erfordert kein nennenswertes Geschick des Benutzers und führt zu keiner Verschmutzung der Hände, weil keine geschmierten Komponenten zu berühren sind. Aufgrund der beiden Freiheitsgrade des Klemmteils, nämlich Verdrehbarkeit um die Längsachse und Verstellung in Richtung der Längsachse, die in bezug auf das Tretlagergehäuse feststeht, ergibt sich nicht nur eine einfache Handhabung, sondern auch eine leichte Anbringung des Klemmteils am Tretlagergehäuse.

Bei der Ausführungsform gemäß Anspruch 2 wird die Spannkraft des Klemmteils sehr wirkungsvoll auf die Halteenden übertragen, die ihren Formschluß mit dem Tretlagergehäuse unverrückbar einnehmen. Das Klemmteil ist gut zugänglich, wenn das Faltrad zusammenzufalten oder aufzubauen ist. Im Gebrauch stört die Klemmvorrichtung nicht. Sie tritt außerdem optisch in den Hintergrund. Sie ist nach unten durch die Kettenscheibe geschützt. Der Benutzer kann sich nicht daran verhängen, weil sie außerhalb des Bewegungsbereiches seiner Füße geborgen angeordnet ist. Das Tretlagergehäuse liegt frei und läßt sich leicht reinigen.

Eine weitere, zweckmäßige Ausführungsform geht aus Anspruch 3 hervor. Das Widerlager dient zum Haltern des Klemmteils und zum Übertragen der Kräfte auf das Tretlagergehäuse und die Halteenden.

Die Maßnahme von Anspruch 4 ist vorteilhaft, um beim Falten möglichst wenig Zeit zu verlieren. Das Abdrückelement löst den entlasteten Klemmteil von den Halteenden, so daß er sich leicht um die Längsachse verdrehen läßt. Dann sind die Halteenden leicht vom Tretlagergehäuse lösbar. Außerdem hält das Abdrückelement den Klemmteil und das Spannelement im gelösten Zustand der Spannvorrichtung unter gegenseitiger Vorspannung, so daß diese Teile beim Transport nicht schlackern können.

Im Hinblick auf eine einfache Handhabung ist die Ausführungvariante gemäß Anspruch 5 zweckmäßig. Nach Lösen des Spannelementes läßt sich der Klemmteil mittels der Drehhandhabe in die Position verschwenken, in der die Halteenden frei werden. Die Drehhandhabe ist auch beim Aufbauen des Faltrades hilfreich.

Eine kompakte Bauweise und geringes Gewicht werden bei der Ausführungsform gemäß Anspruch 6 erreicht. Der Haltebolzen überträgt die Spannkraft des Spannelementes auf den Klemmteil und sichert ihn zusätzlich am Widerlager.

Die Ausführungsform gemäß Anspruch 7 ist besonders vorteilhaft. Das Spannelement wird zum raschen Spannen bzw. Lösen (Einhandbedienung) benutzt. Der Kopfteil kann hingegen zu einer Feineinstellung der Spannkraft benutzt werden. Diese Komponenten sind im hohlen Unterteil des Klemmteils geschützt untergebracht.

Die Ausführungsform gemäß Anspruch 8 ist bedienungsfreundlich und zuverlässig. Mit dem Exzenter-Spannelement lassen sich hohe Haltekräfte erzeugen, wobei die Betätigungskraft nur moderat ist. Das Zwischenelement kann im Hinblick auf eine möglichst großflächige Drehkraft und Abstützungskraftübertragung zweckmäßig sein. Es ist aber auch denkbar, daß das Spannelement direkt auf das Widerlager einwirkt. Die pfannenförmige Aufnahme trägt zur Zentrierung des Klemmteils und zu einem Verschmutzungsschutz bei.

Eine einfache Art der Feinverstellung ist bei der Ausführungsform gemäß Anspruch 9 gegeben.

Bei der alternativen Ausführungsform gemäß Anspruch 10 besteht die Klemmvorrichtung aus nur wenigen Einzelteilen, so daß Gewicht gespart wird. Außerdem läßt sich die Klemmvorrichtung von der Seite her bedienen, von der auch die Halteenden an das Tretlagergehäuse angelegt werden.

Es versteht sich im übrigen von selbst, daß die Halteenden wahlweise von oben oder von unten an das Tretlagergehäuse angelegt und mit diesem formschlüssig verriegelt werden können.

Die Haltewirkung der Klemmvorrichtung wird bei der Ausführungsform gemäß Anspruch 11 durch die äußere Gestaltung des Tretlagergehäuses verstärkt. Die Halteenden sind praktisch nach allen Richtungen formschlüssig festgelegt.

Bei der Ausführungsform gemäß Anspruch 12 ergibt sich eine kompakte Bauweise, weil der Klemmteil möglichst nahe an das Tretlagergehäuse herangerückt ist. Dieses Prinzip hat ferner den Vorteil, daß die Kräfte auf kürzestem Weg zwischen den einzelnen miteinander zu verbindenden Komponenten übertragen werden.

Anhand der Zeichnung werden Ausführungsformen des Erfindungsgegenstandes erläutert. Es zeigen:
- Fig. 1: eine Seitenansicht eines Faltrades, wobei für die Erfindung nebensächliche Radteile wegen der besseren Übersichtlichkeit weggelassen sind,
- Fig. 2: das Faltrad von Fig. 1 in gefaltetem Zustand,
- Fig. 3: ein vergrößertes Detail aus Fig. 1,
- Fig. 4: einen Schnitt in der Ebene IV-IV von Fig. 3, und
- Fig. 5: einen dem Schnitt von Fig. 4 entsprechenden Schnitt durch eine geänderte Ausfübrungsform.

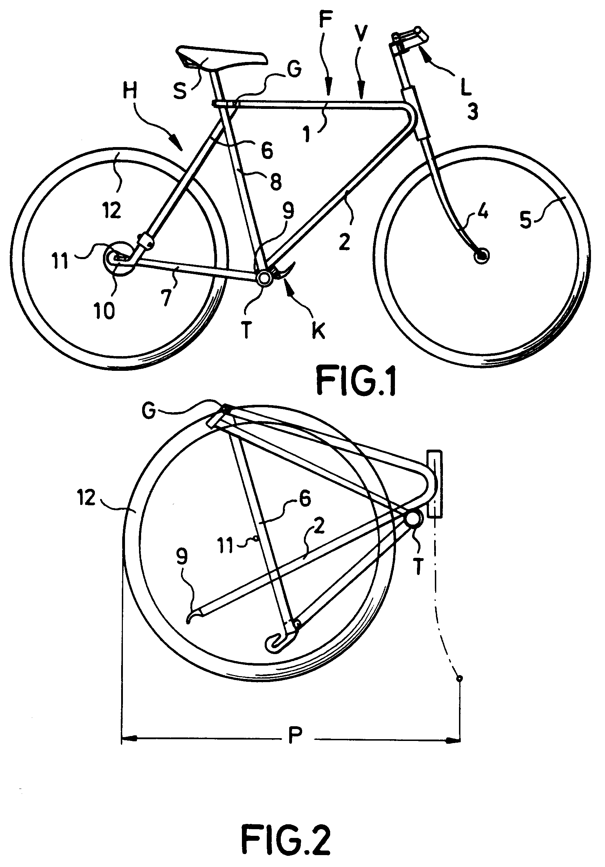

Ein Faltrad F gemäß den Fig. 1 und 2 weist als Hauptteile einen vorderen Rahmenteil V und einen hinteren Rahmenteil H auf, die miteinander schwenkbar über ein unterhalb eines Sattels angeordnetes Gelenk G mit in etwa senkrecht zur Faltradhauptebene liegender Gelenkachse schwenkbar verbunden sind. Der vordere Rahmenteil V weist mindestens eine Oberstrebe 1 auf, die bei der gezeichneten Ausführungsform mit zwei annähernd parallel zueinander und quer zur Faltradhauptebene beabstandeten Unterstreben 2 (Unterstrebenpaar) verbunden sind. Im vorderen Rahmenteil V ist ein Lenkerrohr 3 angeordnet, das einen Lenker L und eine Vorderradgabel 4 für ein herausnehmbares Vorderrad 5 aufnimmt.

Der hintere Rahmenteil H besteht aus zwei quer zur Faltradhauptebene beabstandeten Dreiecksrahmen mit hinteren Rahmenstreben 6, unteren Rahmenstreben 7 und vorderen Rahmenstreben 8, in denen der Sattel S befestigt sein kann. Beide Dreiecksrahmen des hinteren Rahmenteils H sind über ein Tretlagergehäuse T und - auf nicht näher dargestellte Weise - in der Nähe des Gelenks G miteinander verbunden. In Achsaufnahmen 10 der beiden Dreiecksrahmen ist eine Achse 11 des Hinterrades 12 lösbar festgelegt. Die Unterstreben 2 des vorderen Rahmenteils V weisen Halteenden 9 auf, die bei aufgebautem Faltrad gemäß Fig. 1 mittels einer Klemmvorrichtung K am Tretlagergehäuse T lösbar festgelegt sind.

Das Faltrad F gemäß Fig. 1 läßt sich gemäß Fig. 2 auf extrem kleine Faltabmessungen zusammenlegen. Dazu wird zunächst das Vorderrad 5 entnommen, und gegebenenfalls der Lenker sowie der Sattel abgebaut. Dann wird die Klemmvorrichtung K gelöst und werden die Halteenden 9 der Unterstreben 2 innen oder außen an den Rahmenstreben 6 vorbei nach hinten geschoben, indem der vordere Rahmenteil V relativ zum hinteren Rahmenteil H im Gelenk G verschwenkt wird, z.B. bis die Unterstreben 2 nahe dem Lenkerrohr 3 am Tretlagergehäuse T liegen. Das Hinterrad 12 wird mit seiner Achse 11 aus der Achsaufnahme 10 gelöst und nach oben verschoben, bis der Reifen des Hinterrades 12 beim Gelenk G und/oder am Tretlagergehäuse T steht. Das größte Verpackungsmaß P gemäß Fig. 2 ist der Abstand zwischen der hinteren Kontur des Reifens des Hinterrades 12 und dem unteren Ende der Vorderradgabel 4. Dieses Maß ist kaum größer als der Durchmesser des Hinterrades 12.

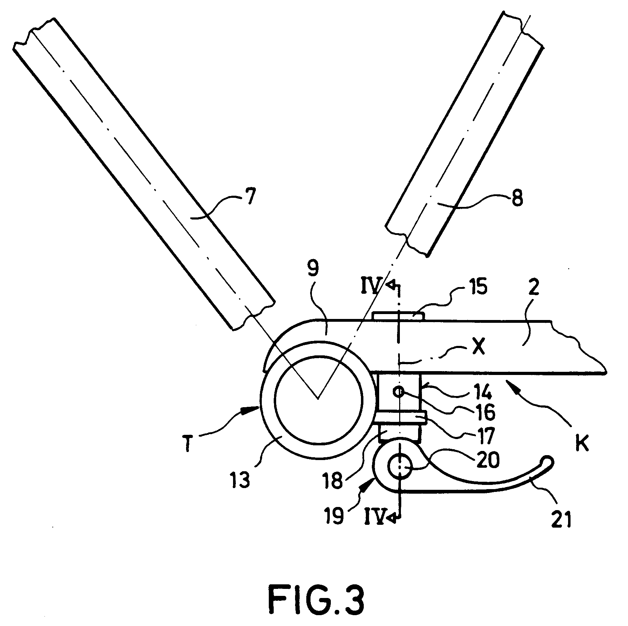

In Fig. 3 ist der Bereich des Tretlagergehäuses T bei formschlüssig festgelegten Halteenden 9 der Unterstreben 2 angedeutet, wobei die Anordnung gegenüber der von Fig. 1 um Uhrzeigersinn nach rechts gedreht ist, so daß (aus zeichnerischen Gründen) die Unterstreben 2 horizontal verlaufen. Das Tretlagergehäuse T ist zweckmäßigerweise ein rohrartiger Körper 13, der an den Rahmenstreben 7, 8 festgeschweißt ist. Die beiden Unterstreben 2 sind mit ihren Halteenden 9 von oben her auf dem Tretlagergehäuse T und zwischen den jeweiligen Rahmenstreben 7, 8 formschlüssig festgelegt. In den Halteenden 9 sind zum Umriß des rohrförmigen Körpers 13 passende Ausschnitte vorgesehen.

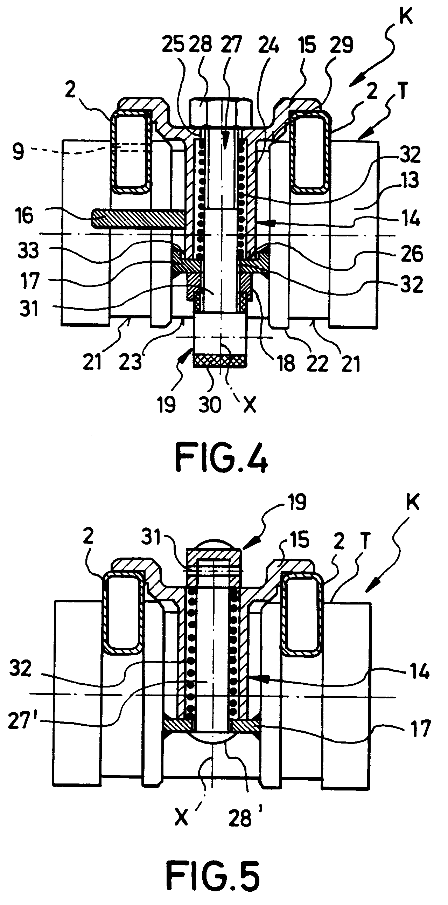

Die Klemmvorrichtung K gemäß den Fig. 3 und 4 enthält einen annähernd T-förmigen Klenunteil 14, dessen dem Hochsteg des T entsprechender Unterteil hohl bzw. hülsenförmig ausgebildet ist, und dessen Querschenkel des T zwei Preßflügel 15 bildet, die zum Festlegen der Halteenden 9 auf dem Tretlagergehäuse T von oben auf die Halteenden 9 legbar sind.

Am Klemmteil 14 ist ein Drehgriff 16, z.B. ein seitlich abstehender Stift, angebracht. Der Drehgriff 16 kann aber auch weggelassen werden.

Die Längsachse des Hochschenkels des T-förmigen Klemmteils 14 ist mit X angedeutet. Der Klemmteil liegt mit seiner Längsachse X an der dem hinteren Rabmenteil H abgewandten Seite des Tretlagergehäuses T, derart, daß die Längsachse X annähernd senkrecht zu den Unterstreben 2 bzw. den Halteenden 9 steht und sich der Hochschenkel bzw. Unterteil 24 des Klemmteils 14 zwischen den Unterstreben 2 befindet. Zum Festlegen des Klemmteils 14 am Tretlagergehäuse T und zum Übertragen der Haltekräfte ist ein Widerlager 17 am Tretlagergehäuse T außen befestigt, zweckmäßigerweise angeschweißt, das bei der Ausführungsform gemäß Fig. 4 eine Öffnung, z. B. die Durchgangsbohrung 32, enthält und oberseitig eine pfannenförmige Aufnahme 33 bildet.

Unterhalb des Widerlagers 17 ist ein Zwischenelement 18 vorgesehen, an dem sich ein Spannelement 19, zweckmäßigerweise ein Exzenter-Spannelement, abstützt, das sich mittels eines Betätigungsgriffes 21 um einen Achsteil 20 drehen läßt. Über das Spannelement 19 läßt sich der Klemmteil 14 in die in Fig. 3 und 4 gezeigte Stellung in Richtung zum Widerlager 17 spannen, in der die Preßflügel 15 von oben auf die Halteenden 9 drücken.

Zum formschlüssigen Festlegen der Halteenden 9 sind in dem Außenumfang des rohrförmigen Körpers 13 des Tretlagergehäuses T Umfangsnuten 21 eingeformt. Zwischen den Umfangsnuten 21 und von diesen durch Erhöhungen 22 (ringförmige Bunde) getrennt ist eine Vertiefung 23 (zweckmäßigerweise eine Umfangsnut) vorgesehen, in der das Widerlager 17 festgelegt ist und in der der Klemmteil 14 das Tretlagergehäuse T in etwa tangiert.

Zwischen den Preßflügeln 15 ist im Klemmteil 14 ein Durchgang 25 vorgesehen, den ein durch die Öffnung 32 im Widerlager 17 greifender Haltebolzen 27 durchsetzt, der sich mit einem Kopfteil 28 am Klemmteil 14 abzustützen vermag. Der Haltebolzen 27 ist mit einem Unterteil 31 des Spannelementes 19 zweckmäßigerweise verschraubbar verbunden, um eine optimale Position des Betätigungsgriffes 21 bei angezogenem Spannelement 19 einstellen zu können. Innerhalb des Unterteils 24 ist ferner ein elastisches Abdrückelement 32, zweckmäßigerweise eine Druckfeder, vorgesehen, die sich am Widerlager 17 abstützt und den Klemmteil 14 vom Widerlager 17 weg beaufschlagt. Angrenzend an die Preßflügel 15 können Schultern 29 am Klemmteil 14 vorgesehen sein, die mit den Erhöhungen 22 zusammenarbeiten, um die Halteenden 9 mit vorbestimmter Anpreßkraft durch die Preßflügel 15 zu beaufschlagen. Zwischen dem unteren Ende 26 des Unterteils 24 und dem Widerlager 17 kann ein nicht dargestelltes Spiel vorgesehen sein.

Das Klemmelement 19 weist einen Exzenterteil 30 auf, der im Zwischenteil 18 abgestützt ist oder das Widerlager 17 direkt beaufschlagt.

### Funktion:

In der Lage gemäß den Fig. 3 und 4 sind die Halteenden 9 festgelegt. Das Spannelement 19 ist in seine Spannstellung verstellt. Die Preßflügel 15 beaufschlagen die Halteenden 9. Reaktionskräfte werden vom Spannelement 19 über den Zwischenteil 18 auf das Widerlager 17 und von diesem auf das Tretlagergehäuse und in den hinteren Rahmenteil H übertragen.

Soll das Faltrad F gefaltet werden, dann wird das Spannelement 19 in Fig. 3 im Uhrzeigersinn in eine Lösestellung verdreht, wodurch der Klemmteil 14 in Richtung seiner Längsachse X verstellbar wird. Das Abdrückelement 32 verschiebt den Klemmteil 14 in Richtung seiner Längsachse X vom Widerlager 17 weg, so daß sich die Preßflügel 15 von den Halteenden 9 abheben. Dann wird der Klemmteil 14 um seine Längsachse X um ca. 90° verdreht, so daß auch die Preßflügel 15 zwischen den Halteenden 9 liegen. Diese lassen sich aus den Nuten 21 herausheben und (s. Fig. 2) beim Verschwenken der Rahmenteile V und H nach hinten verlagern. Das Abdrückelement 32 hält das Klemmteil 14 relativ zum Spannelement 19 vorgespannt, so daß diese Komponenten nicht schlackern.

Ist das Faltrad F wieder aufzubauen, dann werden zunächst die Halteenden 9 wieder auf das Tretlagergehäuse T in der in Fig. 3 gezeigten Weise aufgelegt, ehe der Klemmteil 14 um seine Längsachse X um ca. 90° verdreht wird und mit den Preßflügeln 15 von außen über die Halteenden 9 der Unterstreben greift. Dann wird das Spannelement 19 entgegen dem Uhrzeigersinn in die in Fig. 3 gezeigte Lage verdreht, oder in eine Lage, in der der Betätigungsgriff 21 möglichst nahe an der Unterstrebe liegt oder sogar zwischen diese eintaucht. Die Position des Betätigungsgriffes 21 des Spannelementes 19 in dessen Spannstellung läßt sich durch Verschrauben des Haltebolzens 27 im Teil 31 einstellen. Über diese Schraubverbindung lassen sich verschleißbedingte oder temperaturbedingte Nachstellungen vornehmen.

Die Ausführungsform gemäß Fig. 5 unterscheidet sich von der von Fig. 4 dadurch, daß das Klemmteil 14 oben zwischen den Preßflügeln 15 angeordnet ist. Der Sicherungsbolzen 27' ist mit einem Kopf 28' im Widerlager 17 festgelegt, z.B vernietet. Das Spannelement 19 ist mittels eines Querbolzens 31 mit dem Sicherungsbolzen 27' direkt verbunden. Die Funktion ist gleich wie beim Ausführungsbeispiel der Fig. 4. Die Klemmvorrichtung K besteht aus weniger Einzelteilen. Ferner läßt sich das Tretlagergehäuse T gegebenenfalls näher zum Lenkerrohr 3 hinschwenken.

## Patentansprüche

1. Faltrad (F), mit einem hinteren Rahmenteil (H), in dem ein Tretlagergehäuse (T) angeordnet ist, mit einem wenigstens eine Oberstrebe (1) und ein Unterstrebenpaar (2) aufweisenden vorderen Rahmenteil (V), mit einem unterhalb des Sattelbereichs angeordneten Gelenk (G) mit zur Faltradhauptebene in etwa senkrechter Gelenkachse zwischen der Oberstrebe des vorderen Rahmenteils und dem hinteren Rahmenteil, und mit einer lösbaren Klemmvorrichtung (K) zwischen den Unterstreben des Unterstrebenpaares und dem Tretlagergehäuse, wobei jede Unterstrebe (2) ein am Tretlagergehäuse (T) zum formschlüssigen Eingriff bringbares Halteende (9) aufweist, das mit einem beiden Halteenden gemeinsamen, am Tretlagergehäuse beweglich gehalterten Klemmteil (14) in seiner Eingriffsstellung festlegbar ist, **dadurch gekennzeichnet**, daß der Klemmteil (14) annähernd T-förmig ausgebildet und am Tretlagergehäuse (T) in Richtung der Längsachse (X) des Hochschenkels des T verstellbar und um die Längsachse (X) des Hochschenkels verdrehbar gehaltert ist.

2. Faltrad nach Anspruch 1, **dadurch gekennzeichnet**, daß die Längsachse (X) des Hochschenkels des (T) annähernd senkrecht zu und zwischen den in der Eingriffsstellung befindlichen Unterstreben-Halteenden (9) angeordnet ist, und daß sich der Klemmteil (14) an der dem hinteren Rahmenteil (H) abgewandten Seite des Tretlagergehäuses (T) befindet.

3. Faltrad nach Anspruch 1, **dadurch gekennzeichnet**, daß am Tretlagergehäuse (T) ein vom Außenumfang des Tretlagergehäuses (T) abstehendes Widerlager (17) für den Klemmteil (14) angeordnet ist, und daß der Klemmteil (14) am Widerlager (17), vorzugsweise unverlierbar, gehaltert und mittels eines am Widerlager (17) abstützbaren Spannelements (19) auf die Unterstreben-Halteenden aufpreßbar und in Richtung zum Widerlager (17) verstellbar ist.

4. Faltrad nach Anspruch 1, **dadurch gekennzeichnet**, daß ein elastisches Abdrückelement (32), vorzugsweise eine Rückstellfeder, zwischen dem Widerlager (17) und dem Klemmteil (14) vorgesehen ist.

5. Faltrad nach Anspruch 1, **dadurch gekennzeichnet**, daß am Klemmteil (14) eine Drehhandhabe (16), vorzugsweise ein in etwa senkrecht zur Längsachse (X) abstehender Griff, angeordnet ist.

6. Faltrad nach wenigstens einem der Ansprüche 1 bis 5, **dadurch gekennzeichnet**, daß ein den Hochschenkel des T bildender Unterteil (24) des Klemmteils (14) hohl, vorzugsweise hülsenförmig, ausgebildet ist, und daß den hohlen Unterteil (24) ein mit dem Spannelement (19) verbundener Haltebolzen (27, 27') durchsetzt.

7. Faltrad nach Anspruch 6, **dadurch gekennzeichnet**, daß der Haltebolzen (27) an einem Ende einen am Klemmteil (14), vorzugsweise verstellbar, abstützbaren Kopfteil (28) aufweist, einen Durchgang (32) des Widerlagers (17) durchsetzt, und auf der dem Kopfteil (28) abgewandten Seite des Widerlagers (17) mit dem Spannelement (19) verbunden ist.

8. Faltrad nach den Ansprüchen 6 und 7, **dadurch gekennzeichnet**, daß das Spannelement (19) ein mit einem Betätigungsgriff (21) versehenes Exzenter-Spannelement ist, das entweder direkt oder über ein Zwischenelement (18) am Widerlager (17), vorzugsweise in einer pfannenförmigen Aufnahme (33) des Widerlagers (17), abstützbar ist.

9. Faltrad nach den Ansprüchen 6 bis 8**, dadurch gekennzeichnet**, daß der Haltebolzen (27) schraubverstellbar mit dem Exzenter-Spannelement (19) verbunden ist.

10. Faltrad nach Anspruch 6, **dadurch gekennzeichnet**, daß der Haltebolzen (27') mit einem Ende (28') am Widerlager (17) festgelegt ist und am anderen Ende mit dem auf dem Klemmteil (14) abstützbaren Spannelement (19), vorzugsweise einem Exzenter-Spannelement, verbunden ist.

11. Faltrad nach wenigstens einem der Ansprüche 1 bis 10, **dadurch gekennzeichnet**, daß am Tretlagergehäuse (T) sich zumindest über einen Teil des Umfangs erstreckende Nuten (21) zum Einsetzen der Unterstreben-Halteenden (9) vorgesehen sind.

12. Faltrad nach Anspruch 11, **dadurch gekennzeichnet**, daß das Widerlager (17) in einer mittig zwischen den Nuten (21) für die Halteenden (9) liegenden Vertiefung (23), vorzugsweise einer Umfangsnut, derart angeordnet ist, daß der Unterteil (24) des Klemmteils (14) das Tretlagergehäuse (T) in etwa tangiert, und daß zwischen den Nute (21) und der Vertiefung (23) Erhöhungen (22) als Anschläge für die Einstellung von Preßflügeln (15) des Klemmteils (14) vorgesehen sind.
